# EUROPÄISCHE PATENTANMELDUNG

(11) **EP 0 854 006 A1**
(43) Veröffentlichungstag der Anmeldung: **22.07.1998**
(21) Anmeldenummer: 98100124.1
(22) Anmeldetag: 07.01.1998
(51) Int. Cl.: B23K 37/00, B23K 9/095

(54) **Elektroschweissgerät, insbesondere Schutzgasschweissgerät**

(30) Priorität: 15.01.1997 DE 29700614 U
(71) Anmelder: ELEKTRON-BREMEN Fabrik für Elektrotechnik GmbH, D-28197 Bremen (DE)
(72) Erfinder: Klee, Heiko, 27383 Scheessel (DE); Naucke, Ulrich, 28277 Bremen (DE)
(74) Vertreter: Meissner & Bolte Patentanwälte

(57) **Zusammenfassung**

Beim Elektroschweißen mit Schutzgas werden in Abhängigkeit von dem zu schweißenden Werkstoff unterschiedliche Schutzgase und Schweißwerkzeuge verwendet. Erfindungsgemäß wird das angeschlossene Schweißwerkzeug detektiert. Das dabei gewonnene Signal kann zur Auswahl eines von mehreren abgespeicherten Schweißprogrammen verwendet werden. Vorzugsweise weist das Schweißgerät eine zusätzliche Signalleitung für die Übermittlung des das Schweißwerkzeug repräsentierenden Signals auf.

## Beschreibung

Die Erfindung betrifft ein Elektroschweißgerät, insbesondere ein Schutzgasschweißgerät, mit einer Versorgungs- und Steuereinheit und mit einem hieran über ein Leitungssystem angeschlossenen Schweißwerkzeug, wobei das Leitungssystem über eine oder mehrere Steckverbindungen von der Versorgungs- und Steuereinheit und/oder dem Schweißwerkzeug abtrennbar ist.

Beim Elektroschweißen mit Schutzgas werden in Abhängigkeit von dem zu schweißenden Werkstoff unterschiedliche Schutzgase und Schweißwerkzeuge verwendet. Auch sind unterschiedliche Schweißparameter einzustellen. Bei den modernen Schutzgasschweißgeräten erfolgt dies durch Einstellung der Parameter im Rahmen eines Schweißprogramms. Einzustellen sind beispielsweise:
- Neigung der Strom-/Spannungskennlinie
- Drahtvorschubgeschwindigkeit
- Schutzgasart
- Betriebsart des Schweißstromes (Verhältnis EIN/PAUSE)
- Stromhöhe
- Gasvor- und -nachlaufzeit
- Drahtnachlaufzeit und langsames Abklingen des Stromes
- Stromüberhöhung zu Beginn des Schweißens und Abklingen auf den richtigen Schweißstrom
- langsames Hochfahren der Drahtvorschubgeschwindigkeit.

Beim Wechsel des zu schweißenden Werkstoffes sind somit umfangreiche Einstellarbeiten und Parametereingaben erforderlich. Entsprechend groß ist die Möglichkeit einer Fehlbedienung und damit einer fehlerhaften Schweißung.

Eine Vereinfachung ergibt sich dadurch, daß für unterschiedliche Werkstoffe grundsätzlich auch unterschiedliche Schweißwerkzeuge verwendet werden. Besonders kritisch ist der Wechsel von Stahl auf Aluminium und umgekehrt. Am Schweißwerkzeug vorhandene kleinste Werkstoffreste der vorangegangenen Schweißung können das Ergebnis der nachfolgenden Schweißung maßgeblich negativ beeinflussen. Ein Wechsel des Schweißwerkzeugs ist demnach gerade in derartigen Fällen besonders ratsam.

Die Erfindung geht davon aus, daß für unterschiedliche Werkstoffe stets unterschiedliche Schweißwerkzeuge verwendet werden. Die Erfindung besteht nun darin, daß Mittel vorgesehen sind zum Detektieren des angeschlossenen Schweißwerkzeugs und zum Verarbeiten und/oder Anzeigen eines in Abhängigkeit vom angeschlossenen Schweißwerkzeug gewonnenen Signals. Aufgrund des genannten Signals kann nun eines von mehreren abgespeicherten Schweißprogrammen ausgewählt werden. Diese Auswahl kann durch die Bedienperson oder automatisch geräteintern über eine Schaltung erfolgen. Vorzugsweise sind in einem der Versorgungs- und Steuereinheit zugeordneten Speicher verschiedene Schweißprogramme abgelegt, von denen mittels einer geeigneten Schaltung und aufgrund des das Schweißwerkzeug repräsentierenden Signals das jeweils passende Schweißprogramm automatisch ausgewählt wird. Die Bedienperson muß lediglich das Schweißwerkzeug auswechseln bzw. an die Versorgungs- und Steuereinheit ein neues Schweißwerkzeug anschließen und bestimmte Feineinstellungen vornehmen, etwa die Auswahl der Blechstärke zur Anpassung der optimalen Stromstärke.

Das Schweißwerkzeug ist an die Versorgungs- und Steuereinheit über ein Leitungssystem mit Steckverbindungen angeschlossen. Ein Schutzgasschweißgerät arbeitet üblicherweise mit einer Hochstromleitung für den Schweißstrom, einer Steuerleitung für das Ein- und Ausschalten, einer Antriebs- oder Arbeitsstromleitung für den motorischen Drahtvorschub und mit einer Schutzgasleitung. Alle Leitungen sind vorzugsweise über einen einzigen Stecker an die Versorgungs- und Steuereinheit anschließbar. Das Prinzip eines derartigen Zentralanschlusses ist beispielsweise in dem deutschen Gebrauchsmuster G 94 01 605.4 der Anmelderin beschrieben. Das erfindungsgemäße Schweißgerät weist eine zusätzliche Signalleitung für die Übermittlung des das Schweißwerkzeug repräsentierenden Signals auf. Vorzugsweise ist die Signalleitung integriert in einen zentralen Stecker.

Besonders einfach ist eine Ausführung, bei der das das Schweißwerkzeug repräsentierende Signal im Bereich der Steckverbindung abgelegt ist. So kann beispielsweise auf der dem Schweißwerkzeug zugeordneten Seite einer Steckverbindung des entsprechenden Leitungssystems ein charakteristischer Widerstand gegen das Erdpotential angeordnet sein, dessen Größe auf einfache Weise von einer Schaltung der Versorgungs- und Steuereinheit ausgelesen werden kann. Unterschiedlichen Schweißwerkzeugen sind dann unterschiedliche Widerstände in den zugehörigen Steckverbindungen zugeordnet.

Die zuvor beschriebene Ausführung eines Schweißgerätes beinhaltet eine Steckverbindung zwischen dem Leitungssystem und der Versorgungs- und Steuereinheit. Ebenso kann eine Steckverbindung zwischen dem Leitungssystem und dem Schweißwerkzeug vorgesehen sein. Naturgemäß kann dann auch die dem Schweißwerkzeug zugeordnete Steckverbindung das Signal in der zuvor beschriebenen Weise beinhalten. Auch kann das Schweißwerkzeug selbst Signalträger sein.

Weitere Merkmale der Erfindung sind den Ansprüchen zu entnehmen. Ein Ausführungsbeispiel der Erfindung wird nachfolgend und anhand von Zeichnungen näher erläutert. Es zeigen:

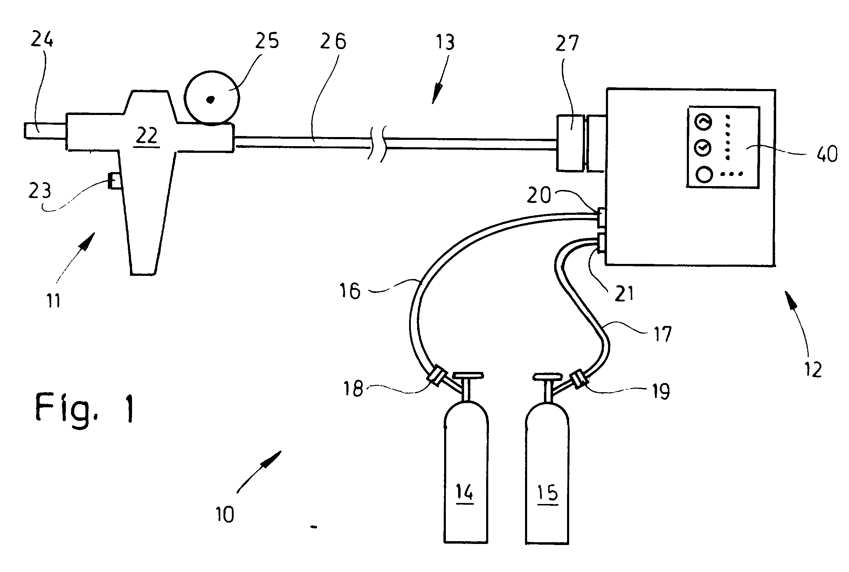

- Fig. 1: Eine Prinzipskizze eines Schutzgasschweißgerätes mit Schweißwerkzeug, Steuer- und Versorgungseinheit und Schutzgastanks,
- Fig. 2: eine Prinzipskizze der Schaltung innerhalb der Steuer- und Versorgungseinheit mit zugeordneter Steckverbindung zum Anschluß des Schweißwerkzeugs.

Ein Schutzgasschweißgerät 10 weist ein Schweißwerkzeug 11, eine Steuer- und Versorgungseinheit 12 sowie ein Leitungssystem 13 zum Verbinden der Teile 11 und 12 auf.

An die Einheit 12 sind zwei Flaschen 14, 15 mit unterschiedlichen Schutzgasen angeschlossen. Entsprechende Schutzgasleitungen zwischen den Flaschen und der Einheit 12 sind mit den Ziffern 16, 17 gekennzeichnet. Diese Leitungen sind über flaschenseitige Anschlüsse 18, 19 und/oder über der Einheit 12 zugeordnete Anschlüsse 20, 21 abtrennbar.

Das Schweißwerkzeug 11 weist ein pistolenartiges Griffstück 22 mit Druckschalter 23, eine Brennerdüse 24 sowie eine Drahtrolle 25 mit nicht gezeigtem motorischen Drahtvorschub auf. An das Griffstück 22 unmittelbar angeschlossen ist das Leitungssystem 13 mit einzelnen weiter unten näher erläuterten Leitungen 26. Das Leitungssystem 13 ist an die Einheit 12 angeschlossen über einen einzigen zentralen Stecker 27.

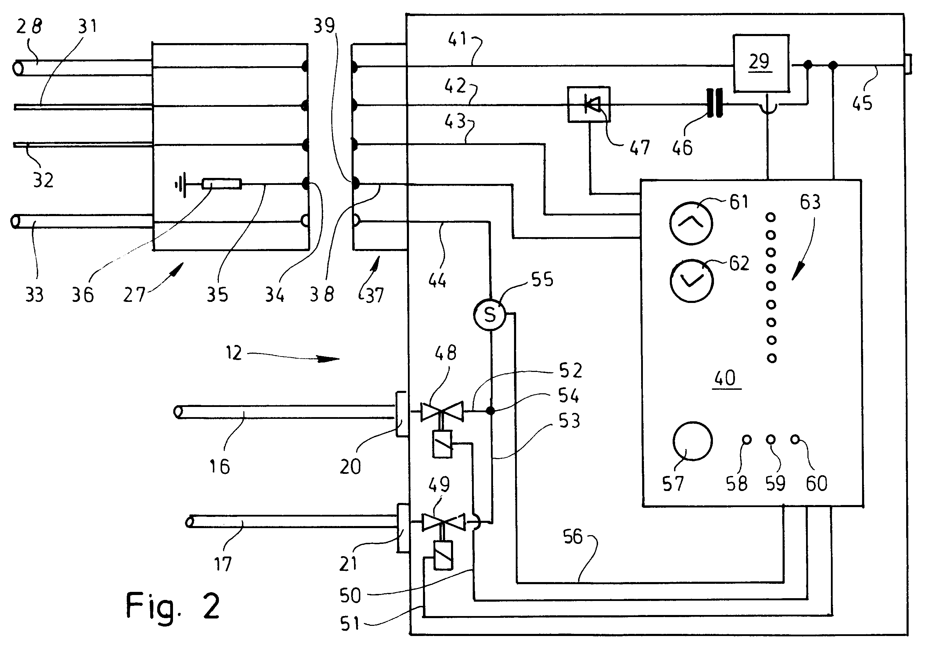

Die Einheit 12 dient der Versorgung des Schweißwerkzeugs 11 mit Schutzgas und elektrischer Energie. Entsprechend ist ein nicht näher dargestelltes Schaltnetzteil integriert. Gemäß Fig. 2 führt eine Hochstromleitung 28 über den Stecker 27 aus der Einheit 12 heraus. Die Leitung 28 liefert den Schweißstrom. Zur Bereitstellung desselben ist in der Einheit 12 eine Stromquelle 29, insbesondere ein Schaltnetzteil hierfür vorgesehen. Herausgeführt aus der Einheit 12 sind weiterhin eine Arbeitsstromleitung 31, eine Steuerleitung 32 und eine Schutzgasleitung 33. Die genannten Leitungen werden allesamt über den zentralen Stecker 27 und das Leitungssystem 13 bis zum Schweißwerkzeug 11 geführt.

Der Stecker 27 beinhaltet einen Signalkontakt 34 einer Signalleitung 35. Letztere endet im Stecker 27 an einem ausgewählten Widerstand 36, welcher an Masse anliegt. Beim Auswechseln des Schweißwerkzeugs 11 wird der Stecker 27 von einer korrespondierenden Buchse 37 an der Einheit 12 getrennt. Danach wird ein anderes Schweißwerkzeug mit einem anderen Stecker ( nicht gezeigt) an die Buchse 37 angeschlossen. Sofern es sich um ein verschiedenartiges Schweißwerkzeug handelt, enthält der zugehörige Stecker einen Widerstand.

Auf Seiten der Einheit 12 führt eine Signalleitung 38 von einem mit dem Signalkontakt 34 korrespondierenden Kontakt 39 zu einer Schaltungseinheit 40. Diese beinhaltet alle Schaltungen zur Ansteuerung der mit den Leitungen 28, 31, 32, 35, 33 korrespondierenden Leitungen 41, 42, 43, 38, 44. So stellt die Leitung 42 den Arbeitsstrom für den motorischen Drahtantrieb bereit. Hierzu wird von einer Eingangsleitung 45 über einen Trafo 46 und eine Steuerschaltung 47 die gewünschte bzw. vorprogrammierte Stromstärke geregelt. Die Signale für die Steuerschaltung 47 kommen aus der Schaltungseinheit 40. Diese wird über die Eingangsleitung 45 mit Leistung versorgt.

Ein die Größe des Widerstands 36 repräsentierendes Signal wird über die Signalleitung 38 der Schaltungseinheit 40 zugeführt und dort weiterverarbeitet. Außerdem führt auch die Steuerleitung 32 bzw. die hierzu korrespondierende Leitung 43 in die Schaltungseinheit 40.

Die Leitung 44 ist eine Gasleitung und steht indirekt in Verbindung mit den eingangs erwähnten Schutzgasleitungen 16, 17. Innerhalb der Einheit 12 sind den Anschlüssen 20, 21 nachgeordnete Magnetventile 48, 49 vorgesehen, die über Signalleitungen 50, 51 aus der Schaltungseinheit 40 angesteuert werden. Intern sind an die Magnetventile 48, 49 anschließende Leitungen 52, 53 im Bereich eines Knotenpunkts 54 zusammengeführt. Zwischen der Leitung 44 und dem Knotenpunkt 54 ist ein Sensor 55 geschaltet. Von diesem führt eine Signalleitung 56 wiederum in die Schaltungseinheit 40.

Verschiedene Programme zur Ansteuerung unterschiedlicher Schweißwerkzeuge und damit zur Durchführung von Schweißungen sind in einem nicht gezeigten Speicher der Schaltungseinheit 40 abgelegt und werden nach Maßgabe des über die Signalleitung 38 festgestellten Widerstands 36 im Stecker 27 ausgewählt und ausgeführt. Das heißt, sobald der Stecker 27 mit der Buchse 37 wirksam verbunden ist, identifiziert die Schaltungseinheit 40 (bei eingeschalteter Energieversorgung) das zugehörige Schweißwerkzeug und stellt das entsprechende Schweißprogramm zum Abruf bereit. Beim Starten des Schweißvorganges - Druckschalter 23 - wird das Programm ausgeführt.

Die Schaltungseinheit 40 ist mit einigen Bedien- und Anzeigeelementen versehen. Hierzu zählen ein Hauptschalter 57 für die Einheit 12 insgesamt, optische Anzeigen 58, 59 und 60, etwa für die Funktionen "Hauptschalter" ein"/"Störung"/"Schweißstrom fließt". Außerdem sind noch Bedien- und Anzeigeelemente für die Feineinstellung der jeweiligen Blechstärke vorgesehen, nämlich ein Druckschalter 61 für eine Erhöhung der Blechstärke und ein Druckschalter 62 zur Verringerung der Blechstärke sowie eine Leuchtdiodenreihe 63 zur Anzeige der eingestellten Blechstärke. Der hier ausgewählte Wert beeinflußt die tatsächliche Stromstärke des jeweils wirksamen Schweißprogramms. Natürlich können schaltungsintern auch so viele Schweißprogramme abgelegt sein, wie sich rein rechnerisch aus allen Kombinationen der möglichen Blechstärken mit den unterschiedlichen Schweißwerkzeugen ergeben. Eine Änderung der "Blechstärke" könnte dann zur Auswahl eines speziell angepaßten Schweißprogramms führen.

Die Schaltungseinheit 40 enthält noch eine Sicherheitseinrichtung. So wird über den Sensor 55 das über die Leitung 44 fließende Schutzgas detektiert und als entsprechendes Signal verarbeitet. Jedem Schweißprogramm ist eine bestimmte Schutzgasart zugeordnet. Falls am Sensor 55 eine andere Schutzgasart detektiert wird, wird der Schweißvorgang sofort abgebrochen bzw. gar nicht erst gestartet. Zugleich kann über die Anzeige 59 eine Störung gemeldet werden. Auch wird das jeweilige von dem Schweißprogramm zur Öffnung angesteuerte Magnetventil 48 oder 49 sofort wieder geschlossen.

### Bezugszeichenliste:

- 10: Schutzgasschweißgerät
- 11: Schweißwerkzeug
- 12: Steuer- und Versorgungseinheit
- 13: Leitungssystem
- 14: Flasche
- 15: Flasche
- 16: Leitung
- 17: Leitung
- 18: Anschluß
- 19: Anschluß
- 20: Anschluß
- 21: Anschluß
- 22: Griffstück
- 23: Druckschalter
- 24: Brennerdüse
- 25: Drahtrolle
- 26: Leitung
- 27: Stecker
- 28: Hochstromleitung
- 29: Stromquelle
- 30: (Ziffer 30 nicht vergeben)
- 31: Arbeitsstromleitung
- 32: Steuerleitung
- 33: Schutzgasleitung
- 34: Signalkontakt
- 35: Signalleitung
- 36: Widerstand
- 37: Buchse
- 38: Signalleitung
- 39: Kontakt
- 40: Schaltungseinheit
- 41: Leitung
- 42: Leitung
- 43: Leitung
- 44: Leitung
- 45: Eingangsleitung
- 46: Trafo
- 47: Steuerschaltung
- 48: Magnetventil
- 49: Magnetventil
- 50: Leitung
- 51: Leitung
- 52: Leitung
- 53: Leitung
- 54: Knotenpunkt
- 55: Sensor
- 56: Signalleitung
- 57: Hauptschalter
- 58: opt. Anzeige
- 59: opt. Anzeige
- 60: opt. Anzeige
- 61: Druckschalter
- 62: Druckschalter
- 63: LED-Reihe

## Patentansprüche

1. Elektroschweißgerät, insbesondere Schutzgasschweißgerät, mit einer Versorgungs- und Steuereinheit (12) und mit einem hieran über ein Leitungssystem (13) angeschlossenen Schweißwerkzeug (11) wobei das Leitungssystem (13) über eine oder mehrere Steckverbindungen (27, 37) von der Einheit (12) und/oder dem Schweißwerkzeug (11) abtrennbar ist, **gekennzeichnet durch** Mittel zum Detektieren des angeschlossenen Schweißwerkzeuges (11) und zum Verarbeiten und/oder Anzeigen eines in Abhängigkeit vom angeschlossenen Schweißwerkzeug (11) gewonnenen Signals.

2. Schweißgerät nach Anspruch 1, dadurch gekennzeichnet, daß das Schweißwerkzeug (11) und/oder das Leitungssystem (13) und/oder die Steckverbindungen (27, 37) Träger eines auslesbaren Signals sind, welches das angeschlossene Schweißwerkzeug (11) repräsentiert.

3. Schweißgerät nach Anspruch 1 oder 2, dadurch gekennzeichnet, daß die Steckverbindungen (27, 37) einen insbesondere zusätzlichen Kontakt (34) aufweisen, über den das das Schweißwerkzeug (11) repräsentierende Signal an die Versorgungs- und Steuereinheit (12) übermittelbar ist.

4. Schweißgerät nach einem der voranstehenden Ansprüche, dadurch gekennzeichnet, daß eine Steckverbindung (27, 37) auf Seiten des Schweißwerkzeugs (11) oder des Leitungssystems (13) Quelle des das Schweißwerkzeug (11) repräsentierenden Signals ist.

5. Schweißgerät nach Anspruch 4, dadurch gekennzeichnet, daß die Steckverbindung (27, 37) einen zusätzlichen Kontakt (34) aufweist, dem auf Seiten des Schweißwerkzeugs (11) oder des Leitungssystems (13) ein spezifischer Widerstand (36) gegen Erdpotential zugeordnet ist, der das Schweißwerkzeug (11) repräsentiert.

6. Schweißgerät nach einem der voranstehenden Ansprüche, gekennzeichnet durch eine Schaltung (Schaltungseinheit 40) zum Auslesen des das Schweißwerkzeug (11) repräsentierenden Signals und zur Auswahl eines korrespondierenden, hierauf abgestimmten Schweißprogramms.

7. Schweißgerät nach Anspruch 6, dadurch gekennzeichnet, daß die Schaltung Bestandteil der Steuer- und Versorgungseinheit (12) ist.

8. Schweißgerät nach einem der voranstehenden Ansprüche, dadurch gekennzeichnet, daß die Versorgungs- und Steuereinheit (12) Anschlüsse (20, 21) für mindestens eine Schutzgasquelle (Flaschen 14, 15), mindestens einen Schutzgasausgang (Leitung 44) und Mittel zum Schalten des gewünschten Schutzgasanschlusses (20, 21) auf den Schutzgasausgang (Leitung 44) aufweist.

9. Schweißgerät nach Anspruch 8, dadurch gekennzeichnet, daß die Versorgungs- und Steuereinheit (12) eine Schaltung (Schaltungseinheit 40) aufweist zum Schalten des gewünschten Schutzgaseingangs (20, 21) auf den Schutzgasausgang (Leitung 44) in Abhängigkeit von dem das Schweißwerkzeug (11) repräsentierenden Signal.

10. Schweißgerät nach Anspruch 8 oder 9, dadurch gekennzeichnet, daß die Versorgungs- und Steuereinheit Mittel zum Detektieren des jeweils auf den Schutzgasausgang (Leitung 44) geschalteten Schutzgases und/oder der auf die Schutzgaseingänge (Anschlüsse 20, 21) geschalteten Schutzgase aufweist.

11. Schweißgerät nach einem der voranstehenden Ansprüche, dadurch gekennzeichnet, daß die Versorgungs- und Steuereinheit (12) einen Speicher aufweist zum Abspeichern unterschiedlicher Schweißprogramme sowie eine Schaltung zur Auswahl und zum Betrieb des Schweißgerätes in Abhängigkeit von dem das Schweißwerkzeug (11) repräsentierenden Signal.

12. Schweißgerät nach einem der voranstehenden Ansprüche, dadurch gekennzeichnet, daß die Versorgungs- und Steuereinheit (12) eine Bedieneinheit (Schalter 61, 62) aufweist, über die mindestens ein Parameter eines ausgewählten Schweißprogramms veränderbar ist, insbesondere zumindest indirekt eine Blechstärke einstellbar ist.

13. Steckverbindung, insbesondere in einem Schweißgerät nach einem der voranstehenden Ansprüche, zur Verbindung eines Schweißwerkzeugs (11) mit einer Versorgungs- und Steuereinheit (12) unter Verwendung eines Leitungssystems (13), mit Kontakten bzw. Anschlüssen zur Übergabe bzw. Weiterleitung von Schweißstrom, Steuerstrom und insbesondere auch Arbeitsstrom für einen Schweißdrahtvorschub sowie einem Fluid, insbesondere einem Schutzgas, gekennzeichnet durch einen Kontakt zur Übergabe eines Signals, welches Charakteristika des Schweißwerkzeugs (11) repräsentiert.

14. Steckverbindung nach Anspruch 13, dadurch gekennzeichnet, daß das das Schweißwerkzeug (11) repräsentierende Signal in der Steckverbindung (Stecker 27) abgelegt ist, insbesondere als Widerstand (36) einer bestimmten Größe gegen Erdpotential und auslesbar über den Signalkontakt (34).

15. Steckverbindung nach Anspruch 13 oder 14, dadurch gekennzeichnet, daß die einzelnen Kontakte und Anschlüsse alle in einem einzigen Stecker (27) zusammengefaßt sind, so daß zum Wechsel des Schweißwerkzeugs (11) nur ein Stecker (27) gelöst und ein neuer Stecker in eine entsprechende Buchse (37) der Versorgungs- und Steuereinheit (12) eingesteckt werden muß.
